## Europäisches Patentamt
## European Patent Office
## Office européen des brevets

(19)

(11) Veröffentlichungsnummer: **0 150 861**
**B1**

(12)

# EUROPÄISCHE PATENTSCHRIFT

(45) Veröffentlichungstag der Patentschrift:
14.12.88

(51) Int. Cl.⁴: **H 04 L 25/49**

(21) Anmeldenummer: **85101067.8**

(22) Anmeldetag: **01.02.85**

(54) Selbstsynchronisierender Entwürfler.

(30) Priorität: **02.02.84 DE 3403639**

(43) Veröffentlichungstag der Anmeldung:
**07.08.85 Patentblatt 85/32**

(45) Bekanntmachung des Hinweises auf die Patenterteilung:
**14.12.88 Patentblatt 88/50**

(84) Benannte Vertragsstaaten:
**AT BE CH DE FR GB IT LI NL SE**

(56) Entgegenhaltungen:
FR-A-2 410 921
GB-A-1 591 805

ELEKRONIK, Band 32, Nr. 26, Dezember 1983, Seiten 67-70, München, DE; T. HERMES u.a.: "Parallel arbeitende Scrambler, Descrambler und Zufallsfolgen-Generatoren"

(73) Patentinhaber: **Siemens Aktiengesellschaft Berlin und München, Wittelsbacherplatz 2, D-8000 München 2 (DE)**

(72) Erfinder: **Pospischil, Reginhard, Dr.- Ing., Gabriel von Seidlstrasse 15, D-8032 Gräfelfing (DE)**

## Beschreibung

Die Erfindung betrifft einen Selbstsynchronisierenden Entwürfler entsprechend dem Oberbegriff des Anspruches 1.

Bei der digitalen Signalübertragung können, sofern nicht aufwendige Umcodierungen vorgenommen werden, Impulsmuster mit einem störenden Gleichstromanteil oder einem besonders hohen Energieanteil bei anderen diskreten Frequenzen auftreten. Zur Vermeidung dieser Impulsmuster wird das zu übertragende digitale Signal durch eine Modulo-2-Addition mit einer Pseudozufallsfolge sendeseitig verwürfelt. Empfangsseitig folgt durch eine weitere Modulo-2-Addition mit der bereits sendeseitig verwendeten Pseudozufallsfolge die Entwürflung. Die dabei notwendige Synchronisierung der sendeseitig und der empfangsseitig verwendeten Pseudozufallsgeneratoren kann durch Verwendung freilaufender und damit selbstsynchronisierender Verwürfler- und Entwürfleranordnungen umgangen werden.

Mit dem weiteren Ausbau des digitalen Fernmeldesetzes ergibt sich die Notwendigkeit, die erwähnten Verwürfler- und Entwürfleranordnungen für digitale Signale hoher Übertragungsgeschwindigkeit aufzubauen.

Aus den "Siemens Forschungs- und Entwicklungsberichten", Band 6, 1977, Nr. 1, Seiten 1 bis 5, ist eine Möglichkeit bekannt, Verwürfler- und Entwürfleranordnungen für PCM-Signale hoher Taktfrequenz aufzubauen. Dabei werden die PCM-Signale in mehreren parallelen Kanälen mit vergleichsweise niedrigerer Bitfolgefrequenz verwürfelt und erst die verwürfelten Signale durch multiplexen zum Übertragungssignal zusammengefaßt. Analog ist empfangsseitig eine Demultiplexer vorgesehen, an den sich die parallele Entwürfelung in mehreren Kanälen mit niedrigerer Bitfolgefrequenz anschließt. Bei einer derartigen Lösung ergibt sich neben dem hohen Aufwand die Notwendigkeit, Multiplexer und Demultiplexer miteinander zu synchronisieren, außerdem ist ein Laufzeitausgleich vorzunehmen, da in einem bestimmten Zeitpunkt jeweils nur ein Demultiplexerausgang ein Signal führt. Wegen des ungleichen Aufbaus der einzelnen Verwürflerstufen wird auch die Integration eines derartigen Entwürflers erschwert.

Aus der GB-A-1 591 805 ist ein selbstsynchronisierender Entwürfler mit 9 getakteten Schieberegisterstufen bekannt, die in 4 Entwürflerstufen enthalten und dort jeweils mit 2 Modulo-2-Addierern kombiniert sind, so daß sich 3 Entwürflerstufen mit 2 Schieberegistern und eine Entwürflerstufe mit 3 Schieberegistern ergibt.

Die Aufgabe bei der vorliegenden Erfindung besteht also darin, ein auch für die Übertragung digitaler Signale hoher Bitfolgefrequenz geeigneten selbstsynchronisierenden Entwürfler zu finden, dessen Aufwand insbesondere durch Verzicht auf eine Demultiplexeinrichtung verringert ist.

Erfindungsgemäß wird die Aufgabe dadurch gelöst, daß ein selbstsynchronisierender Entwürfler der eingangs genannten Art durch die im Kennzeichen des Patentanspruches 1 enthaltenen Merkmale weitergebildet ist.

Besonders vorteilhaft bei der erfindungsgemäßen Lösung ist der auch bei längeren Entwürflern übersichtliche Aufbau aus rein digitalen Gliedern, der eine Integration wesentlich erleichtert. Bevorzugte Weiterbildungen des erfindungsgemäßen Entwürflers für digitale Signale mit einer Verwürflerperiode von 127 oder von 31 Bit sind in den Patentansprüchen 2 und 3 näher beschrieben.

Die Erfindung soll im folgenden anhand der Zeichnung näher erläutert werden. In der Zeichnung zeigt

Fig. 1    die Schaltung einer einzelnen Entwürflerstufe,

Fig. 2    die Schaltung eines siebenstufigen Entwürflers und

Fig. 3    die Schaltung eines fünfstufigen Entwürflers.

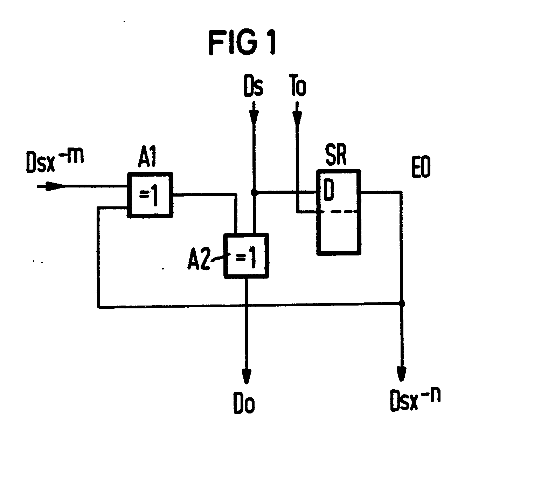

Die in der Fig. 1 dargestellte Entwürflerstufe EO ist Teil eines n-stufigen Entwürflers. Die Entwürflerstufe enthält einen ersten und einen zweiten Modulo-2-Addierer A1, A2 sowie eine Schieberegisterstufe SR und dient zur Entwürflung des n-ten Bits des verwürfelten digitalen Signals DS. Der erste Eingang des ersten Modulo-2-Addierers A1 ist an den Q-Ausgang der Schieberegiserstufe SR der gleichen Entwürflerstufe angeschlossen, während der zweite Eingang dieses Addierers mit dem Ausgang der Schieberegisterstufe der m-ten Entwürflerstufe verbunden ist und von dieser ein digitales Signal $Dsx^{-m}$ erhält. Der Ausgang des ersten Modulo-2-Addierers A1 ist mit dem ersten Eingang des zweiten Modulo-2-Addierers A2 verbunden. Der zweite Eingang dieses Addierers ist an den Eingang für das n-te Bit des verwürfelten digitalen Signals DS angeschlossen und gleichzeitig mit dem D-Eingang der Schieberegisterstufe SR verbunden. Der Ausgang des zweiten Modulo-2-Addierers A2 stellt den Ausgang der Entwürflerstufe dar, an dem das entwürfelte n-te Bit des digitalen Signals Do entnehmbar ist. Die Schieberegisterstufe SR ist mit einem Taktsignal T getaktet, das den Bittakt der digitalen Signale geteilt durch die Anzahl n der parallel arbeitenden Entwürflerstufen entspricht. Das Ausgangssignal der Schieberegisterstufe wird zusätzlich dem zweiten Eingang des ersten Modulo-2-Addierers einer weiteren Entwürflerstufe zugeführt. Die Wahl der Anzahl n der parallel arbeitenden Schieberegisterstufen richtet sich dabei zum einen nach der gewünschten Verringerung der Arbeitsgeschwindigkeit, zum anderen aber nach dem gewählten Serien-Parallelwandler, da die Anzahl von dessen Stufenausgängen der Anzahl n der parallelen Entwürflerstufen entspricht. Weitere Möglichkeiten können sich dadurch ergeben, daß eine Anzahl Bit des digitalen Signals ein Codewort ergeben und deshalb parallel umgesetzt werden. Für die weitere serielle Übertragung des entwürfelten digitalen Signals ist ein entsprechender Parallel-Serienwandler nachzuschalten. Die Serien-Parallelwandlung und auch die Parallel-Serienwandlung muß dabei weder bitsynchron noch wortsynchron erfolgen. Dadurch ergibt sich eine weitere Verringerung des Aufwandes, die zusammen mit der Möglichkeit, auf eine einfachere und damit billigere Halbleitertechnologie auszuweichen, eine Integration des erfindungsgemäßen Entwürflers erleichtert. Bei einer festgesetzten Verwürflerperiode der digitalen Signale benötigt ein parallel arbeitender Entwürfler die gleiche Anzahl an Schieberegisterstufen wie ein seriell arbeitender, die Anzahl der erforderlichen Modulo-2-Addierer ist beim parallelen Entwürfler allerdings höher.

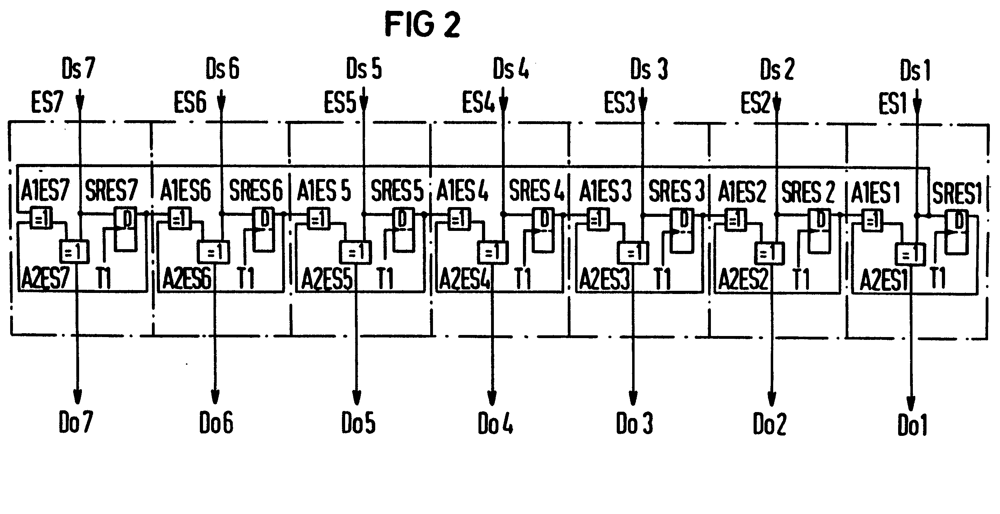

In der Fig. 2 ist ein aus sieben Entwürflerstufen ES1 ... ES7 nach der Fig. 1 aufgebauter selbstsynchronisierender Entwürfler dargestellt. Durch die Kettenschaltung ergibt sich ein analoger Aufbau zu einem siebenstufigen Entwürfler mit einer Verwürflerperiode von $2^7-1$ = 127 Bit. Bei einer Schieberichtung von links nach rechts wird in der ersten Entwürflerstufe ES1 von rechts das erste Bit, daran links anschließend das zweite Bit und schließlich in der Entwürflerstufe ES7 das siebente Bit des verwürfelten digitalen Signals DS entwürfelt. Bei der in Fig. 1 dargestellten Entwürflerstufe EO ist der zweite Eingang des ersten Modulo-2-Addierers A1 mit den Schieberegisterausgang der m-ten Entwürflerstufe zu verbinden. Bei der Fig. 2 sind n = 7 und m = n - 1 = 6. Daraus ergibt, daß der zweite Eingang des ersten Modulo-2-Addierers jeder Stufe jeweils mit dem Ausgang der Schieberegisterstufe der in Schieberichtung vorher angeordneten Entwürflerstufe zu verbinden ist. Der Eingang des ersten Modulo-2-Addierers A1ES1 der ersten Entwürflerstufe ist also mit dem Ausgang der Schieberegisterstufe SRES2 der zweiten Entwürflerstufe zu verbinden. Entsprechend geschieht diese Verbindung bis zur siebenten Entwürflerstufe ES7, an die sich zyklisch wieder die erste Entwürflerstufe ES1 anschließt. Zum Ausgleich der Laufzeiten durch die Modulo-2-Addierer wird dem ersten Modulo-2-Addierer A1ES7 der siebenten Entwürflerstufe aber nicht das Ausgangssignal der Schieberegisterstufe SRES1 der ersten Entwürflerstufe sondern schon das eine Taktzeit vorher anstehende Eingangssisignal dieser Stufe zugeführt. Das Taktsignal T1 für die als Schieberegisterstufen verwendeten getakteten D-Flip-Flops hat eine Frequenz, die einem siebentel der Taktfrequenz der verwürfelten digitalen Signale entspricht und durch Frequenzteilung aus deren Taktsignal erzeugt wird.

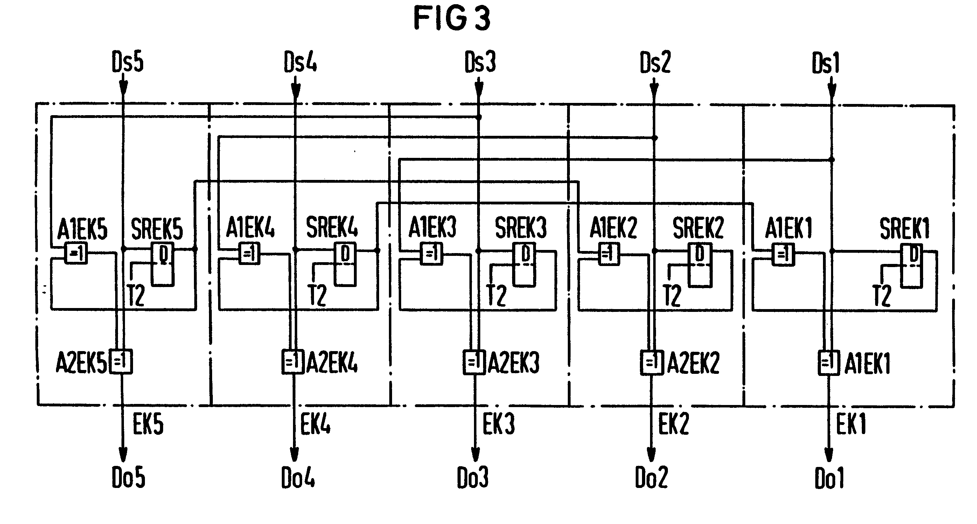

In der Fig. 3 ist ein fünfstufiger Entwürfler dargestellt, bei dem also n = 5 und bei dem m = n - 3 = 2 ist. Die einzelnen Entwürflerstufen EK1. .. EK5 entsprechen dabei der in der Fig. 1 dargestellten Entwürflerstufe EO, die Signalschieberichtung ist von links nach rechts, so daß in der ersten Entwürflerstufe EK1 das erste Bit und entsprechend in der fünften Entwürflerstufe EK5 das fünfte Bit entwürfelt wird. Die einzelnen Entwürflerstufen sind jeweils getrennt mit Eingängen verbunden, an denen jeweils ein Bit des verwürfelten digitalen Signals Ds1...Ds5 ansteht. Im Hinblick darauf, daß m = 2 gewählt ist, ist der zweite Eingang des ersten Modulo-2-Addierers A1EK1 der ersten Entwürflerstufe EK1 mit dem Ausgang der Schieberegisterstufe SREK4 der vierten Entwürflerstufe verbunden. Entsprechend ist der erste Modulo-2-Addierer A1EK2 der zweiten Entwürflerstufe an die Schieberegisterstufe SREK5 der fünften Entwürflerstufe EK5 angeschlossen. Da nur fünf Entwürflerstufen vorhanden sind, ist der zweite Eingang des ersten Modulo-2-Addierers der dritten Entwürflerstufe EK3 an die erste Entwürflerstufe EK1 angeschlossen und entsprechend ist der erste Modulo-2-Addierer der fünften Entwürflerstufe EK5 an die zweite Entwürflerstufe angeschlossen. Zum Ausgleich von Laufzeiten sind dabei die zweiten Eingänge der Modulo-2-Addierer nicht mit den Ausgängen sondern mit den Eingängen der Schieberegisterstufen verbunden und erhalten ein Signal, das eine Taktzeit früher ansteht. Die Schieberegisterstufen bestehen ebenfalls aus getakteten D-Flip-Flops, das Taktsignal T2 hat ein fünftel der Bittaktfrequenz der verwürfelten digitalen Signale und wird durch Frequenzteilung gewonnen.

Es gilt also auch für den fünfstufigen Entwürfler nach der Fig. 3 die allgemeine Regel, daß bei allen Entwürflerstufen bis zu (n - m + 1)-ten der zweite Eingang des ersten Modulo-2-Addierers der einen Entwürflerstufe mit dem Ausgang der Schieberegisterstufe der Entwürflerstufe für das m-te Bit verbunden ist, wobei m kleiner als n und ganzzahlig ist. Ab der (n-m)-ten Entwürflerstufe erfolgt dann die Verbindung vom zweiten Eingang des ersten Modulo-2-Addierers zum Eingang der Schieberegisterstufe der m-ten Entwürflerstufe, entsprechend erfolgt bei der n-m-1sten Entwürflerstufe die Verbindung zur Schieberegisterstufe der (n-1)sten Entwürflerstufe und entsprechend. Durch die Abnahme des entwürfelten Signals an den Ausgängen der Schieberegisterstufen erfolgt zusätzlich eine Unterdrückung von Impulsspitzen.

Damit der Entwürfler nicht in eine unerwünschte Kurzperiode fällt, kann jeweils zwischen ersten und zweiten Modulo-2-Addierer der Entwürflerstufen ein dritter Modulo-2-Addierer eingefügt werden, dessen freier Eingang mit einer Erkennungsschaltung für die Kurzperiode verbunden ist.

## Patentansprüche

1. Selbstsynchronisierender Entwürfler mit n getakteten Schieberegisterstufen (SR) zur Entwürflung eines Signals mit einer Verwürflerperiode von $2^n$-1 Bit, wobei der Ausgang wenigstens einer Schieberegisterstufe (SR) mit dem Eingang wenigstens eines Modulo-2-Addierers (A1, A2) verbunden ist, wobei eine Anzahl Eingänge für jeweils eines aus einer Anzahl paralleler Bits des verwürfelten digitalen Signals (DS) vorgesehen sind und die Eingänge entsprechend der Folge des ankommenden Bits geordnet und mit jeweils einer Entwürflerstufe verbunden sind, und die Takteingänge der Schieberegisterstufen (SR) mit einer Quelle für ein Taktsignal verbunden sind, deren Frequenz ein Bruchteil der Bittaktfrequenz der digitalen Signale ist,

dadurch gekennzeichnet,

daß n parallele Eingänge für jeweils eines von n parallelen Bits des verwürfelten digitalen Signals (DS) vorgesehen sind, daß die Entwürflerstufen neben der Schieberegisterstufe (SR) jeweils einen ersten und einen zweiten Modulo-2-Addierer (A1, A2) enthalten und der Ausgang der Schieberegisterstufe (SR) mit dem ersten Eingang des ersten Modulo-2-Addierers (A1) und dessen Ausgang mit dem ersten Eingang des zweiten Modulo-2-Addierers (A2) verbunden ist, daß der zweite Eingang des zweiten Modulo-2-Addierers (A2) mit dem zugeordneten Eingang für das verwürfelte digitale Signal und mit dem Eingang der in der gleichen Entwürflerstufe enthaltenen Schieberegisterstufe (SR) verbunden ist, daß der Ausgang des zweiten Modulo-2-Addierers (A2) den Ausgang der jeweiligen Entwürflerstufe für das entwürfelte digitale Signal darstellt, daß bei allen Entwürflerstufen bis zur (n-m+1)-ten der zweite Eingang des ersten Modulo-2-Addierers (A1) der einen Entwürflerstufe mit dem Ausgang der Schieberegisterstufe der Entwürflerstufe für das m-te Bit verbunden ist, daß m kleiner n und ganzzahlig ist, daß bei der (n-m)-ten Entwürflerstufe die Verbindung vom zweiten Eingang des ersten Modulo-2-Addierers zum Eingang der Schieberegisterstufe der n-ten Entwürflerstufe erfolgt und entsprechend von der (n-m-1.)-ten Entwürflerstufe zur (n-1.)-ten Entwürflerstufe, daß am Ausgang des zweiten Modulo-2-Addierers die einzelnen Bits des entwürfelten digitalen Signals entnehmbar sind und daß die Quelle für das Taktsignal eine Frequenz entsprechend dem 1/n-fachen Teil der Bittaktfrequenz der digitalen Signale aufweist.

2. Selbstsynchronisierender Entwürfler nach Patentanspruch 1, dadurch gekennzeichnet, daß sieben parallele Eingänge zum Anschluß an sieben Stufenausgänge eines Serien-Parallel-Wandlers vorgesehen sind, dessen Serieneingang mit der Quelle für die verwürfelten digitalen Signale verbunden ist, daß jeder der parallelen Eingänge (Ds1 ... Ds7) mit einer von sieben Entwürflerstufen (ES1 ... ES7) verbunden ist, daß der zweite Eingang des ersten Modulo-2-Addierers (A1ES7) der siebten Entwürflerstufe (E57) mit dem Ausgang des zweiten Modulo-2-Addierers (A2ES1) der ersten Entwürflerstufe (E51) verbunden ist, daß sieben parallele Ausgänge (Do1 ... Do7) für das entwürfelte digitale Signal vorgesehen sind, die jeweils getrennt mit den Ausgängen der zweiten Modulo-2-Addierer der einzelnen Entwürflerstufen verbunden sind und daß die Schieberegisterstufen mit einer Quelle für ein Taktsignal mit einer Frequenz entsprechend $\frac{1}{7}$ der Bittaktfrequenz der verwürfelten digitalen Signale verbunden sind (Fig. 2).

3. Selbstsynchronisierender Entwürfler nach Patentanspruch 1, dadurch gekennzeichnet, daß fünf parallele Eingänge zu parallelelen Verarbeitungen von fünf Bit des zu entwürfelnden digitalen Signals vorgesehen sind, daß die fünf parallelen Eingänge jeweils getrennt mit einer von fünf Entwürflerstufen (EK1 ... EK5) verbunden sind, daß der zweite Eingang des ersten Modulo-2-Addierers (A1EK1) der ersten Entwürflerstufe (EK1) mit dem Ausgang der Schieberegisterstufe (SREK4) der vierten Entwürflerstufe (EK4) verbunden ist, daß der zweite Eingang des ersten Modulo-2-Addierers (A1EK2) der zweiten Entwürflerstufe (EK2) mit dem Ausgang der Schieberegisterstufe (SREK5) der fünften Entwürflerstufe (EK5) verbunden ist, daß der zweite Eingang des ersten Modulo-2-Addierers (A1EK3) der dritten Entwürflerstufe (EK3) mit dem Eingang der Schieberegisterstufe (SREK1) der ersten Entwürflerstufe (EK1) verbunden ist, daß der zweite Eingang des ersten Modulo-2-Addierers (A1EK4) der vierten Entwürflerstufe (EK4) mit dem Eingang der Schieberegisterstufe (SREK2) der zweiten Entwürflerstufe (EK2) verbunden ist, daß der zweite Eingang des ersten Modulo-2-Addierers (A1EK5) der fünften Entwürflerstufe (EK5) mit dem Eingang der Schieberegisterstufe (SREK3) der dritten Entwürflerstufe (EK3) verbunden ist und daß die Schieberegisterstufen mit einer Quelle für ein Taktsignal mit einer Frequenz entsprechend $\frac{1}{5}$ der Bittaktfrequenz der verwürfelten digitalen Signale verbunden sind (Fig. 3).

## Claims

1. Self-synchronising descrambler comprising n clocked shift register stages (SR) for descrambling a signal having a scrambler period of $2^n$-1 bits, the output of at least one shift register stage (SR) being connected to the input of at least one modulo-2 adder (A1, A2), a number of inputs being provided for in each case one of a number of parallel bits of the scrambled digital signal (DS) and the inputs being arranged in accordance with the sequence of incoming bits and being connected to one descrambler stage in each case, and the clock inputs of the shift register stages (SR) being connected to a source of a clock signal, the frequency of which is a fraction of the bit clock frequency of the digital signals,

characterized in that n

parallel inputs are provided for in each case one of n parallel bits of the scrambled digital signal (DS), that the descrambler stages contain, in addition to the shift register stage (SR) in each case a first and a second modulo-2 adder (A1, A2) and the output of the shift register stage (SR) is connected to the first output of the first modulo-2 adder (A1) and the output of the latter is connected to the first input of the second modulo-2 adder (A2), that the second input of the second modulo-2 adder (A2) is connected to the associated input for the scrambled digital signal and to the input of the shift register stage (SR) contained in the same descrambler stage, that the output of the second modulo-2 adder (A2) represents the output of the respective descrambler stage for the descrambled digital signal, that in all descrambler stages up to the (n-m+1)th the second input of the first modulo-2 adder (A1) of one descrambler stage is connected to the output of the shift register stage of the descrambler stage of the mth bit, that m is less than n and integral, that in the (n-m)th descrambler stage the connection from the second input of the first modulo-2 adder is effected to the input of the shift register stage of the nth descrambler stage and, correspondingly, from the (n-m-1)th descrambler stage to the (n-1)th descrambler stage, that the individual bits of the descrambled digital signal can be picked up at the output of the second modulo-2 adder, and that the source of the clock signal exhibits a frequency corresponding to 1/n-times the bit clock frequency of the digital signals.

2. Self-synchronising descrambler according to Claim 1, characterised in that seven parallel inputs are provided for connection to seven stage outputs of a series/parallel converter, the series input of which is connected to the source of the scrambled digital signals, that each of the parallel inputs (Ds1...Ds7) is connected to one of seven descrambler stages (ES1 ... ES7), that the second input of the first modulo-2 adder (A1ES7) of the seventh descrambler stage (ES7) is connected to the output of the second modulo-2 adder (A2ES1) of the first descrambler stage (ES1), that seven parallel outputs (Do1 ... Do7) are provided for the descrambled digital signal which are in each case connected separately to the outputs of the second modulo-2 adder of the individual descrambler stages, and that the shift register stages are connected to a source of a bit clock signal having a frequency corresponding to 1/7 of the bit clock frequency of the scrambled digital signals (Figure 2).

3. Self-synchronising descrambler according to Claim 1, characterised in that five parallel inputs are provided for the parallel processing of five bits of the digital signal to be descrambled, that the five parallel inputs are in each case separately connected to one of five descrambler stages (EK1 ... EK5), that the second input of the first modulo-2 adder (A1EK1) of the first descrambler stage (EK1) is connected to the output of the shift register stage (SREK4) of the fourth descrambler stage (EK4), that the second input of the first modulo-2 adder (A1EK2) of the second descrambler stage (EK2) is connected to the output of the shift register stage (SREK5) of the fifth descrambler stage (EK5), that the second input of the first modulo-2 adder (A1EK3) of the third descrambler stage (EK3) is connected to the input of the shift register stage (SREK1) of the first descrambler stage (EK1), that the second input of the first modulo-2 adder (A1EK4) of the fourth descrambler stage (EK4) is connected to the input of the shift register stage (SREK2) of the second descrambler stage (EK2), that the second input of the first modulo-2 adder (A1EK5) of the fifth descrambler stage (EK5) is connected to the input of the shift register stage (SREK3) of the third descrambler stage (EK3), and that the shift register stages are connected to a source of a clock signal having a frequency corresponding to 1/5 of the bit clock frequency of the scrambled digital signals (Figure 3).

## Revendications

1. Débrouilleur à synchronisation automatique comportant n étages (SR) de registre à décalage, commandés de façon cadencée et servant à débrouiller un signal possédant une période de brouillage égale à $2^n-1$ bits, et dans lequel la sortie d'au moins un étage (SR) du registre à décalage est reliée à l'entrée d'au moins un additionneur modulo 2 (A1, A2), et dans lequel il est prévu un certain nombre d'entrées pour les bits respectifs faisant partie d'un certain nombre de bits parallèles du signal numérique brouillé (DS) et les entrées sont ordonnées conformément à la succession des bits arrivants et sont réliées à des étages respectifs du débrouilleur, et les entrées de cadence des étages (SR) du registre à décalage sont reliées à une source délivrant un signal de cadence, dont la fréquence est égale à une fraction de la fréquence de la cadence binaire des signaux numériques, caractérisé par le fait que n entrées parallèles sont prévues pour les n bits parallèles respectifs du signal numérique brouillé (DS), que les étages du débrouilleur contiennent, en dehors de l'étage (SR) du registre à décalage, respectivement des premier et second additionneurs modulo 2 (A1, A2) et que la sortie de l'étage (SR) du registre à décalage est reliée à la première entrée du premier additionneur modulo 2 (1), dont la sortie est reliée à la première entrée du second additionneur modulo 2 (A2), que la seconde entrée du second additionneur modulo 2 (A2) est reliée à l'entrée associée prévue pour le signal numérique brouillé et à l'entrée de l'étage (SR) du registre à décalage, contenu dans le même étage du débrouilleur, que la sortie du second additionneur modulo 2 (A2) constitue la sortie de l'étage respectif du débrouilleur pour le signal numérique débrouillé, que dans tous les étages du débrouilleur jusqu'aux (n-m+1)-ème, à savoir l'entrée du premier additionneur modulo 2 (A1) d'un étage du débrouilleur est reliée à la sortie de l'étage du registre à décalage de l'étage du débrouilleur pour le n-ème bit, que m est inférieur à n et est un nombre entier, dans le cas du (n-m)-ème étage du débrouilleur, la seconde entrée du premier additionneur modulo 2 est reliée à l'entrée de l'étage du registre à décalage du n-ème étage du débrouilleur, de façon correspondante le (n-m-1)-ème étage du débrouilleur est relié au (n-1)-ème étage du débrouilleur, que les différents bits du signal numérique debrouillé peuvent être prélevés sur la sortie du second additionneur modulo 2 et que la source délivrant le signal de cadence possède une cadence correspondant à 1/n fois la fréquence de la cadence binaire des signaux numériques.

2. Débrouilleur à synchronisation automatique suivant la revendication 1, caractérisé par le fait qu'il est prévu sept entrées parallèles pour le raccordement à sept sorties des étages d'un convertisseur série-parallèle, dont l'entrée série est reliée à la source des signaux numériques brouillés, que chacune des entrées parallèles (Ds1 ... Ds7) est reliée à l'un de sept étages (ES1. .. ES7) du débrouilleur, que la seconde entrée du premier additionneur modulo 2 (A1ES7) du septième étage (ES7) du débrouilleur est reliée à la sortie du second additionneur modulo 2 (A2ES1) du premier étage (ES1) du débrouilleur, qu'il est prévu sept sorties parallèles (Do1 ... Do7) pour le signal numérique débrouillé, qui sont reliées d'une manière respectivement séparée, aux sorties du second additionneur modulo 2 des différents étages du débrouilleur et que les étages du registre à décalage sont reliés à une source pour un signal de cadence possédant une fréquence correspondant à 1/7 fois la fréquence de la cadence binaire des signaux numériques brouillés (figure 2).

3. Débrouilleur à synchronisation automatique suivant la revendication 1, caractérisé par le fait qu'il est prévu cinq entrées parallèles pour le traitement en parallèle de cinq bits du signal numérique débrouillé, que les cinq entrées parallèles sont reliées, d'une manière respectivement séparée, à l'un de cinq étages (EK1 ... EK5) du débrouilleur, que la seconde entrée du premier additionneur modulo 2 (A1EK1) du premier étage (EK1) du débrouilleur est reliée à la sortie de l'étage (SREK4) du registre à décalage du quatrième étage (EK4) du débrouilleur, que la seconde entrée du premier additionneur modulo 2 (A1EK2) du second étage (EK2) du débrouilleur est reliée à la sortie de l'étage (SEK5) du registre à décalage du cinquième étage (EK5) du débrouilleur, que la seconde entrée du premier additionneur modulo 2 (A1EK3) du troisième étage (EK3) du débrouilleur est reliée à l'entrée de l'étage (SREK1) du registre à décalage du premier étage (EK1) du débrouilleur, que la seconde entrée du premier additionneur (A1EK4) du quatrième étage (EK4) du débrouilleur est reliée à l'entrée de l'étage (SREK2) du registre à décalage du second étage (EK2) du débrouilleur, que la seconde entrée du premier additionneur modulo 2 (AEK5) du cinquième étage (EK5) du débrouilleur est reliée à l'entrée de l'étage (SREK3) du registre à décalage du troisième étage (EK3) du débrouilleur, et que les étages du registre à décalage sont reliés à une source délivrant un signal de cadence possédant une fréquence égale à 1/5 fois la fréquent ce de la cadence binaire des signaux numériques brouillés (figure 3).

# FIG 1

Ds    To

Dsx$^{-m}$    A1    SR    EO

=1    D

A2 =1

Do    Dsx$^{-n}$

# FIG 2

0 150 861

# FIG 3

0 150 861